# EUROPÄISCHE PATENTSCHRIFT

(11) **EP 2 358 614 B1**
(45) Veröffentlichungstag und Bekanntmachung des Hinweises auf die Patenterteilung: **31.10.2012**
(21) Anmeldenummer: 09740037.8
(22) Anmeldetag: 07.09.2009
(51) Int. Cl.: B65G 47/84, B29C 49/42

(54) **VERFAHREN UND VORRICHTUNG ZUR ÜBERGABE VON WERKSTÜCKEN**
METHOD AND APPARATUS FOR TRANSFERRING WORKPIECES
PROCÉDÉ ET DISPOSITIF DE TRANSFERT DE PIÈCES

(30) Priorität: 11.12.2008 DE 102008062315
(43) Veröffentlichungstag der Anmeldung: 24.08.2011
(73) Patentinhaber: KHS Corpoplast GmbH, 22145 Hamburg (DE)
(72) Erfinder: LINKE, Michael, 22047 Hamburg (DE); LITZENBERG, Michael, 21502 Geesthacht (DE); LEWIN, Frank, 22889 Tangstedt (DE); STRIEBEL, Carlo, 22049 Hamburg (DE); BAUMGARTE, Rolf, 22926 Ahrenburg (DE)
(74) Vertreter: Hausfeld, Norbert
(86) Internationale Anmeldenummer: PCT/DE2009/001266
(87) Internationale Veröffentlichungsnummer: WO 2010/066217

(56) Entgegenhaltungen:
- EP-A2- 1 970 134
- DE-A1-102006 012 020
- DE-A1-102006 023 531
- SU-A1- 1 007 968
- US-A- 4 667 998

## Beschreibung

Die Erfindung betrifft ein Verfahren zur Übergabe von Werkstücken, bei dem das Werkstück von einer zangenartigen Halteeinrichtung beaufschlagt wird, die mindestens einen relativ zu einem Zangenträger verschwenkbar angeordneten Zangenarm aufweist und bei dem der Zangenarm zur Durchführung von Greif- und Freigabebewegungen verschwenkt wird sowie bei dem die Schwenkbewegung des Zangenarmes von mindestens einem Magneten gesteuert wird, wobei als magnet ein Permanent magnet verwendet wird.

Die Erfindung betrifft darüber hinaus eine Vorrichtung zur Übergabe von Werkstücken, die mindestens eine zangenartige Halteeinrichtung zur Beaufschlagung des Werkstückes aufweist, wobei die Halteeinrichtung mit mindestens einem relativ zu einem Zangenträger verschwenkbar angeordneten Zangenarm versehen ist, der eine erste Schwenkpositionierung zur Halterung des Werkstückes und eine zweite Schwenkpositionierung für eine Freigabe des Werkstückes aufweist und bei der eine Positionierungseinrichtung für den Zangenarm mindestens einen relativ zu einem Gegenelement abstandsveränderlich angeordneten Magneten aufweist, wobei der magnet als ein Permanentmagnet ausgebildet ist.

Derartige Verfahren und Vorrichtungen können beispielsweise im Zusammenhang mit der blastechnischen Herstellung von Behältern zum Einsatz kommen. Bei derartigen Anwendungen ist die Vorrichtung in einer Blasmaschine angeordnet. Das betreffende Werkstück, das von der Halteeinrichtung beaufschlagt wird, kann hierbei ein Vorformling, ein geblasener Behälter oder ein Tragelement sein, das seinerseits den Vorformling oder den geblasenen Behälter haltert.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bekannt ist die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Klemmdornen, die zur Halterung in einen Mündungsbereich des Vorformlings einführbar sind, gehören ebenfalls zu den verfügbaren Konstruktionen.

Eine Handhabung von Behältern und Vorformlingen unter Verwendung von Übergaberädern wird beispielsweise in der DE-OS 199 06 438 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Verwendung von Zangen zur Handhabung der Vorformlinge kann sowohl ausschließlich als auch in Kombination mit anderen Trag oder Handhabungselementen erfolgen. Beispielsweise können die Vorformlinge entlang eines Teiles ihres Transportweges von Transportdornen gehaltert werden und entlang mindestens eines weiteren Teiles des Transportweges ist eine Handhabung unter Verwendung von Zangen möglich. Die bislang verwendeten Zangen können aber noch nicht alle Anforderungen erfüllen, die an eine schonende und zugleich zuverlässige Handhabung der Vorformlinge gestellt werden.

Die wesentlichen Anforderungen bestehen in einer zuverlässigen und störungssicheren Handhabung der Vorformlinge bei hohen Förderraten an Vorformlingen je Zeiteinheit. Zweckmäßigerweise sollen die Zangen sowohl zur Handhabung von Vorformlingen als auch zur Handhabung von geblasenen Flaschen geeignet sein. Darüber hinaus sollen mechanische Beschädigungen der Vorformlinge als Folge der Handhabung durch die Zangen vermieden bzw. minimiert werden.

Zangenartige Halteeinrichtungen sind in einer Vielzahl von Ausführungsformen bekannt. Zum einen gibt es aktiv gesteuerte Zangen, bei denen die Öffnungs- und Schließbewegungen beispielsweise durch eine mechanische Kurvensteuerung oder durch pneumatische oder elektrische Stellelemente vorgegeben werden. Darüber hinaus gibt es auch Zangen, bei denen die Zangenarme nicht aktiv gesteuert werden, sondern bei denen die Zangenarme mit schrägen Einführflächen versehen sind, die bei einem Hineinschieben des Werkstückes zu einer Öffnungsbewegung der Zangenarme führen. Nach einem vollständigen Einführen des Halterungsbereiches des Werkstückes schnappen die Zangen dann aufgrund von Federn zu und haltern das Werkstück. Ein Herausnehmen des Werkstückes kann ebenfalls wiederum unter Verwendung von schrägen Leitflächen bei Einbringung vorgegebener Zugkräfte erfolgen.

Sowohl die Verwendung von aktiv gesteuerten als auch von passiv betätigten Zangen führt jeweils sowohl zu Vorteilen als auch zu Nachteilen. Die aktiv gesteuerten Zangen erfordern entsprechende Stellelemente, die einen Bauraum beanspruchen, entsprechende Kosten zur Folge haben und durch erforderliche Wartungsarbeiten den Serviceaufwand erhöhen. Passiv gesteuerte Zangen sind zwar in der Regel sehr einfach konstruiert, führen durch den direkten Kontakt mit den Werkstücken aber zu Kratzern oder Abrieb im Bereich des Werkstückes.

In der EP 1 970 134 A2 werden ein gattungsgemäßes Verfahren und eine gattungsgemäße Vorrichtung zur Übergabe von Werkstücken beschrieben. Eine Steuerung von Schwenkbewegungen der Zangenarme erfolgt unter Verwendung von Magneten.

Ähnliche Vorrichtungen werden auch in der SU 1007968 A1, der DE 10 2006 023 531 A1, der DE 10 2006 012 020 A1 sowie der US 4667998 A beschrieben.

Aufgabe der vorliegenden Erfindung ist es, ein Verfahren der einleitend genannten Art derart zu verbessern, daß ein zuverlässiger und schonender Transport der Werkstücke bei hoher Transportgeschwindigkeit unterstützt wird, und daß die Betriebssicherheit erhöht wird.

Diese Aufgabe wird erfindungsgemäß dadurch gelöst, daß der Zangenarm mit einer zusätzlichen mechanischen Betätigungseinrichtung gekoppelt wird.

Weitere Aufgabe der vorliegenden Erfindung ist es, eine Vorrichtung der einleitend genannten Art derart zu konstruieren, daß ein einfacher Vorrichtungsaufbau und zugleich ein schonender Transport der Werkstücke sowie eine höhere Betriebssicherheit erreicht wird.

Diese Aufgabe wird erfindungsgemäß dadurch gelöst, daß der Zangenarm mit einer zusätzlichen mechanischen Betätigungseinrichtung gekoppelt ist.

Durch die Verwendung von Magneten können berührungslos wirkende magnetische Anziehungskräfte oder Abstovungskräfte genutzt werden. Wird der Zangenarm beispielsweise mit einem Betätigungselement gekoppelt, auf dem ein Permanentmagnet mit seinem magnetischen Nordpol in eine Kontaktrichtung weisend angeordnet ist, so wird dieser Permanentmagnet bei einer Annäherung eines weiteren Permanentmagneten, dessen magnetischer Nordpol in Richtung auf den ersten Magneten weist, mit einer Druckkraft beaufschlagt. Bei einer entsprechenden mechanischen Anordnung führt diese Druckkraft entweder zu einer Öffnungsbewegung oder zu einer Schließbewegung der Zange. Umgekehrt erfolgt bei der Annäherung eines zweiten Magneten, dessen Südpol in Richtung auf den ersten Magneten weist, eine Zugkraftbeaufschlagung des ersten Magneten, die ebenfalls zur Durchführung einer Öffnungs- oder Schließbewegung der Zange genutzt werden kann.

Generell ist es erforderlich, zur Erzeugung von entsprechenden Druckkräften zwei Magnete zu verwenden, die jeweils mit gleichen magnetischen Polen einander zugewandt angeordnet sind. Zur Erzeugung von Zugkräften ist es hingegen ausreichend, nur einen Magneten zu verwenden. Dieser Magnet kann mit einem ferromagnetischen Material, beispielsweise Eisen, zusammenwirken. Die Verwendung von zwei Magneten auch zur Erzeugung von Zugkräften führt allerdings zu einer Erhöhung der einwirkenden Kräfte und somit zu einer kompakteren Anordnung bei vorgegebenen Stellkräften.

Die vorstehend und nachfolgend aufgeführte Handhabung der Vorformlinge unter Verwendung der Zangenarme bezieht sich in gleicher Weise auch auf die Handhabung von geblasenen Behältern, ohne daß hierauf jedesmal separat hingewiesen wird. Durch eine federnde verspannung der Zangenarme relativ zu einem Zentralelement oder relativ zueinander wird eine automatische Halterung der Vorformlinge bzw. Flaschen ohne Verwendung separater Verriegelungen oder aktiver Betätigungselemente unterstützt. Ebenfalls ist auch daran gedacht, daß die Zangenarme nicht direkt auf die Vorformlinge oder die Flaschen zugreifen, sondern daß ein Zugriff auf Tragelemente erfolgt, die ihrerseits die Vorformlinge oder Flaschen haltern.

Eine hohe Kraftentfaltung wird dadurch unterstützt, daß mindestens zwei Magnete zusammenwirken.

Eine Zangensteuerung in Abhängigkeit von einem Fortschritt des Übergabevorganges wird dadurch ermöglicht, daß der Magnet und ein Gegenelement relativ zueinander abstandsveränderlich bewegt werden.

Die Übergaben einer Vielzahl von Werkstücken je Zeiteinheit werden dadurch unterstützt, daß der Zangenträger von einem Übergabearm eines rotierenden Transportrades positioniert wird.

Zur Erzeugung von Druckkräften ist vorgesehen, daß der Magnet und ein als Magnet ausgebildetes Gegenelement während der Durchführung einer Zangenbetätigung mit gleichsinnigen magnetischen Polen einander zugewandt positioniert werden.

Eine Erzeugung von Zugkräften wird dadurch möglich, daß der Magnet und ein als Magnet ausgebildetes Gegenelement während der Durchführung einer Zangenbetätigung mit gegensinnigen magnetischen Polen einander zugewandt positioniert werden.

Ein verschleißfreier Betrieb wird dadurch erreicht, daß der Magnet und das Gegenelement berührungslos aneinander vorbeigeführt werden.

Eine typische Anwendung besteht darin, daß der Zangenträger im Bereich einer Blasmaschine angeordnet wird.

Ebenfalls ist daran gedacht, daß der Zangenträger im Bereich einer Füllmaschine angeordnet wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Darstellung eines Transportelementes mit zwei Zangenarmen und einem Zentralelement in einem geschlossenen Zustand der Zange,
- Fig. 6: die Anordnung gemäß Fig. 5 nach einem Öffnen der Zange,
- Fig. 7: eine schematische Darstellung einer geöffneten Zange, die im Bereich eines Betätigungselementes einen Permanentmagneten aufweist, sowie eines zugeordneten positionierbaren Gegenmagneten,
- Fig. 8: die Anordnung gemäß Fig. 7 nach einer Annäherung des beweglichen Magneten an den Magneten im Bereich der Zange und
- Fig. 9: die Anordnung gemäß Fig. 7 und Fig. 8 nach einer Beendigung der Schließbewegung der Zange.

Nachfolgend wird die erfindungsgemäße Handhabung von Werkstücken am Beispiel einer Blasmaschine erläutert.

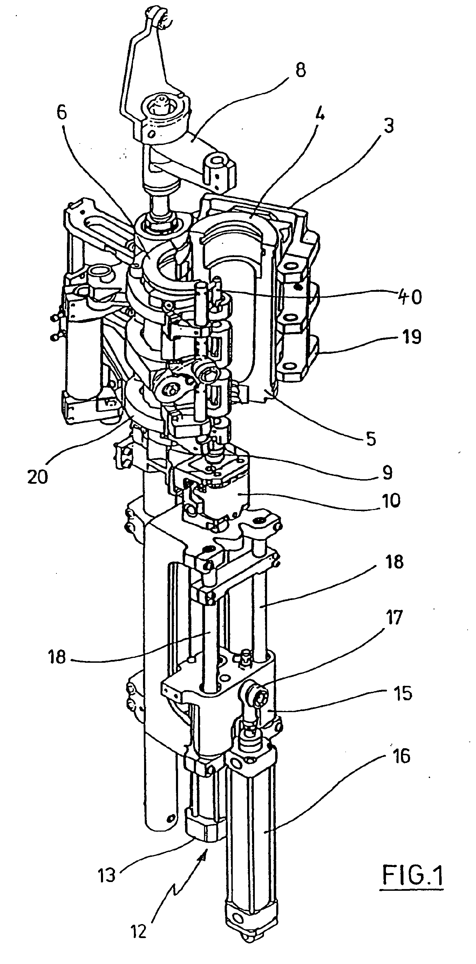

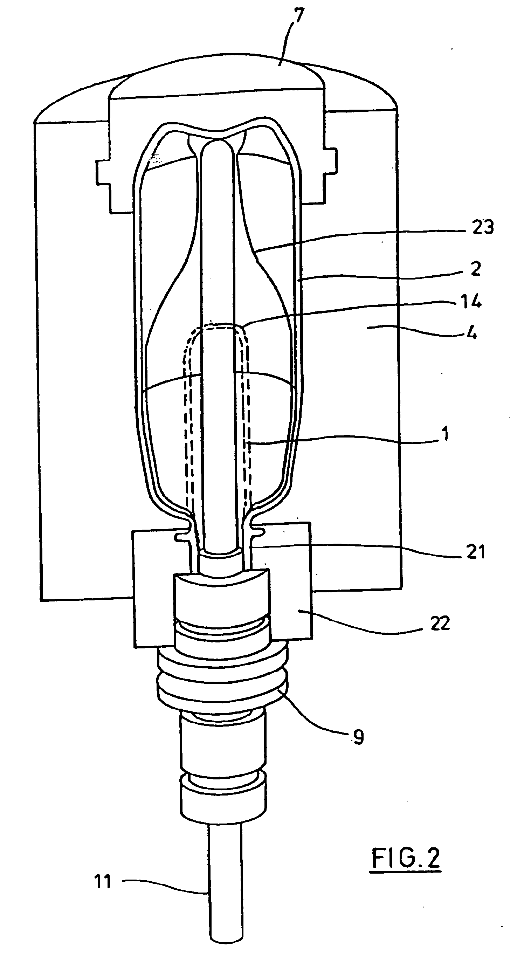

Der prinzipielle Aufbau einer Vorrichtung zur Umformung von Vorformlingen (1) in Behälter (2) ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Halteelement (9) fixiert sein. Es ist beispielsweise möglich, den Vorformling (1) über Zangen oder andere Handhabungsmittel direkt in die Blasform (4) einzusetzen.

Zur Ermöglichung einer Druckluftzuleitung ist unterhalb der Blasform (4) ein Anschlußkolben (10) angeordnet, der dem Vorformling (1) Druckluft zuführt und gleichzeitig eine Abdichtung vornimmt. Bei einer abgewandelten Konstruktion ist es grundsätzlich aber auch denkbar, feste Druckluftzuleitungen zu verwenden. Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad (25) angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

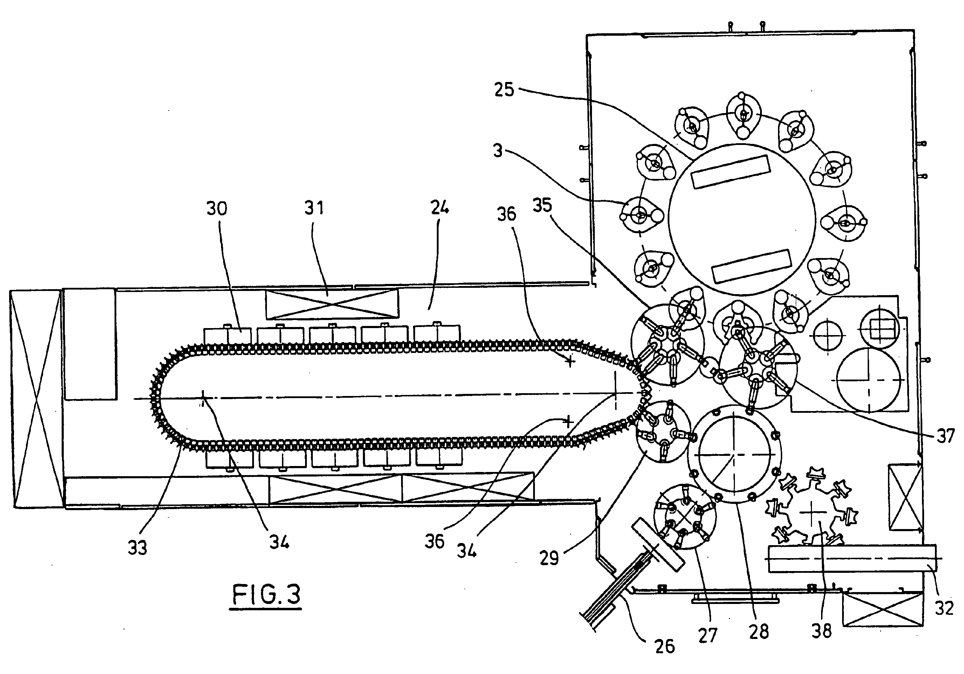

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von Übergaberädern (37, 28, 38) einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (27) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (27) und des Blasrades (25) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (27) und zum Blasrad (25). Alternativ zur Verwendung von kettenartigen Transportelementen (33) ist es beispielsweise auch möglich, ein rotierendes Heizrad zu verwenden.

Nach einem fertigen Blasen der Behälter (2) werden diese vom Übergaberad (38) aus dem Bereich der Blasstationen (3) herausgeführt und zur Ausgabestrecke (32) transportiert.

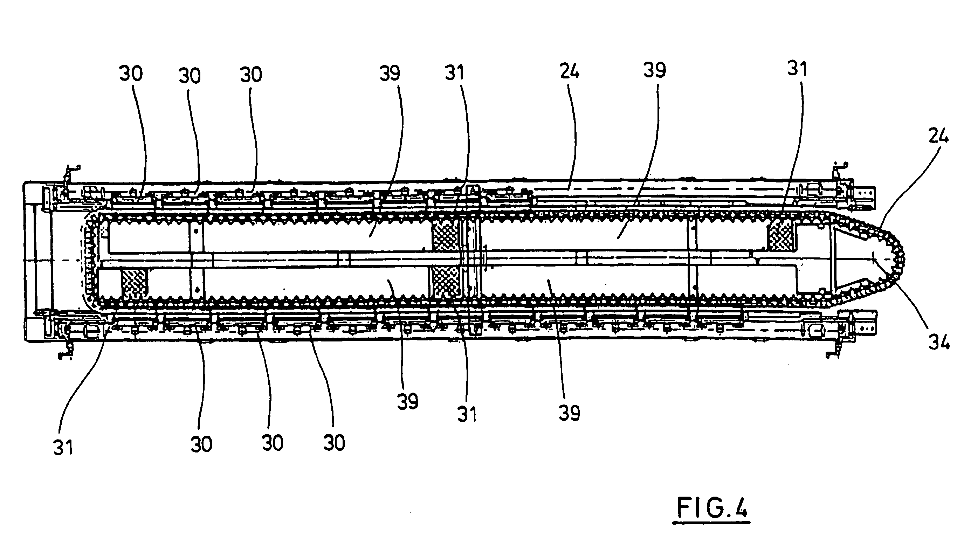

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Ein Transport der Vorformlinge (1) und der Behälter (2) durch die Blasmaschine kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und vor einem Erreichen der Ausgabestrecke (32) wieder gedreht. Gemäß einer anderen Variante wird der Vorformling (2) im Bereich der Heizstrecke (24) mit seiner Mündung in lotrechter Richtung nach unten orientiert beheizt, vor Erreichen des Blasrades (25) jedoch wieder um 180° gedreht.

Gemäß einer dritten Ausführungsvariante durchläuft der Vorformling den gesamten Bereich der Blasmaschine ohne Durchführung von Wendevorgängen mit seiner Mündung in lotrechter Richtung nach oben orientiert.

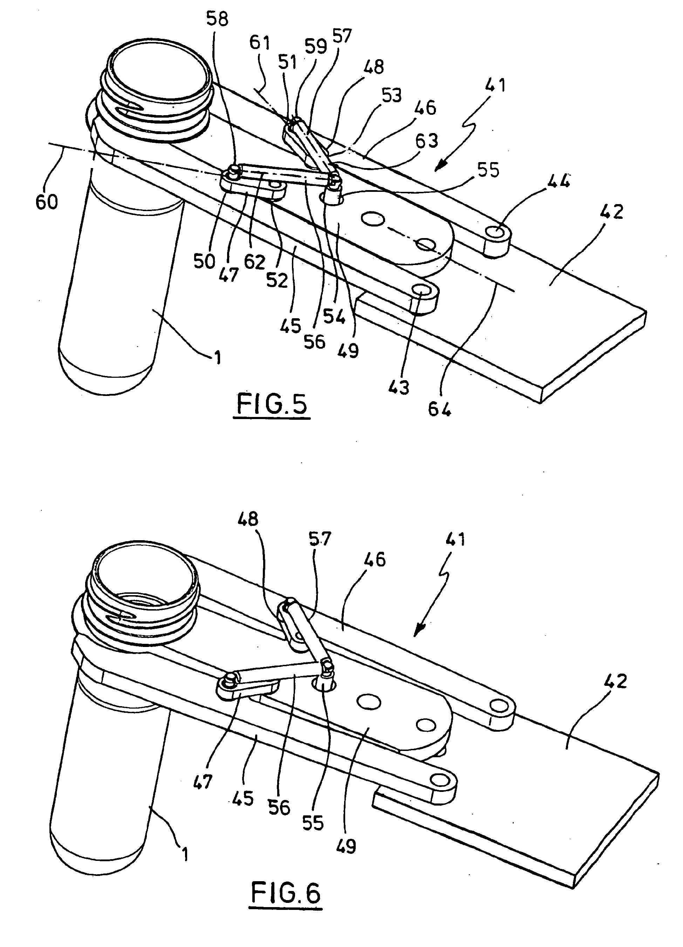

Fig. 5 zeigt in einer perspektivischen Darstellung einen von einem zangenartigen Transportelement (41) gehalterten Vorformling (1). In ähnlicher Art und Weise kann das Transportelement (41) auch einen geblasenen Behälter (2) positionieren. Das Transportelement (41) weist einen Zangenträger (42) auf, der über Schwenkgelenke (43, 44) mit Zangenarmen (45, 46) verbunden ist. Die Zangenarme (45, 46) sind über Hebel (47, 48) mit einem Zentralelement (49) gekoppelt. Die Hebel (47, 48) sind von Schwenkgelenken (50, 51) mit den Zangenarmen (45, 46) und von Schwenkgelenken (52, 53) mit dem Zentralelement (49) verbunden. Das Zentralelement (49) weist eine Ausnehmung (54) auf, in die ein mit dem Zangenträger (42) verbundenes Halteelement (55) eingesetzt ist. Gemäß einer alternativen Ausführungsform kann das Halteelement (55) mit dem Zentralelement (49) auch einteilig verbunden sein.

Mindestens eines der Schwenkgelenke (43, 44, 50, 51, 52, 53) kann als Zapfen-Ausnehmungs-Kombination, Scharnier, Filmgelenk oder Festkörpergelenk realisiert sein. Bei einer Verwendung von Filmgelenken oder Festkörpergelenken ist es möglich, alle Bauteile des Transportelementes (41) mit Ausnahme der Federn (56, 57) einteilig auszubilden oder einige der Bauteile zu einer oder mehreren Modulen zusammenzufassen.

Die Zangenarme (45, 46) sind zusätzlich über Federn (56, 57) mit dem Haltelement (55) verbunden. Vorzugsweise sind die Federn (56, 57) als Zugfedern ausgebildet und werden im Bereich ihrer dem Halteelement (55) abgewandten Ausdehnung von Zapfen (58, 59) gehaltert, die als Verlängerung der Schwenkgelenke (50, 51) angeordnet sind.

Fig. 5 zeigt das Transportelement (41) in einem geschlossenen Zustand, in dem der Vorformling (1) von den Zangenarmen (45, 46) gehaltert ist. Durch die Federn (56, 57) werden die Zangenarme (45, 46) sowie das Zentralelement (49) in der dargestellten Schließstellung stabilisiert. Es ist insbesondere zu erkennen, daß sowohl die Hebel (47, 48) mit Hebellängsachsen (60, 61) als auch die Federn (56, 57) mit Federlängsachsen (62, 63) schräg zu einer Zentrallängsachse (64) des Zentralelementes (49) angeordnet sind. Die Hebellängsachsen (60, 61) und die Federlängsachsen (62, 63) erstrecken sich hierbei bezüglich der Zentrallängsachse (64) in Richtung auf den Vorformling (1) schräg nach vorne weisend.

Bei der in Fig. 5 dargestellten Ausführungsform stellt die Zentrallängsachse (64) eine Symmetrieachse des Transportelementes (41) dar. Das Zentralelement (49) ist hierbei zwischen den Zangenarmen (45, 46) angeordnet und die Zangenarme (45, 46) liegen in der dargestellten Schließstellung seitlich am Zentralelement (49) an.

Fig. 6 zeigt die Anordnung gemäß Fig. 5 nach der Durchführung einer Öffnungsbewegung der Zangenarme (45, 46). Gemäß dem hier gezeigten Ausführungsbeispiel ist das Halteelement (55) starr mit dem Zentralelement (49) verbunden und wird gemeinsam mit dem Zentralelement (49) relativ zum Zangenträger (42) verschoben. Durch die Positionierbewegung des Zentralelementes (49) werden die Hebel (47, 48) und damit auch die Zangenarme (45, 46) verschwenkt und geben den Vorformling (1) frei.

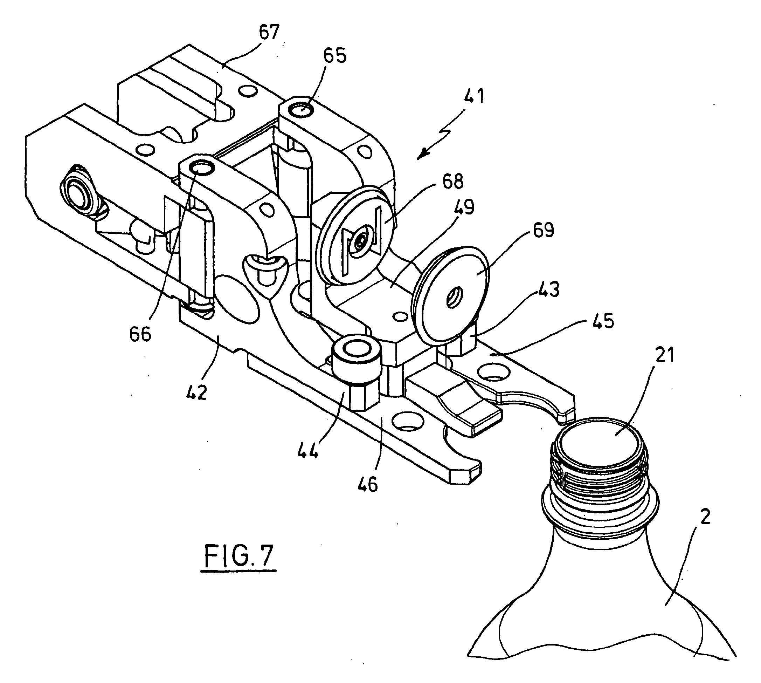

Fig. 7 zeigt eine detailliertere konstruktive Ausführung eines Transportelementes (41). Der Zangenträger (42) ist hier seinerseits über Schwenkgelenke (65, 66) auslenkbar mit einem Elementsockel (67) verbunden. Die Anordnung ermöglicht eine Ausweichbewegung bei eventuellen Kollisionen. Im Bereich des Zentralelementes (49) ist ein als Permanentmagnet (68) ausgebildeter Magnet angeordnet. Der Permanentmagnet (68) ist beim dargestellten Ausführungsbeispiel mit seinem magnetischen Nordpol in eine dem Elementsockel (67) abgewandte Richtung weisend angeordnet. Mit einem Abstand zum Permanentmagneten (68) ist ein Gegenmagnet (69) angeordnet, der ebenfalls als ein Permanentmagnet ausgebildet sein kann. Im dargestellten Beispiel weist der Gegenmagnet (69) mit seinem magnetischen Nordpol auf den Permanentmagneten (68).

Bei einer Annäherung des Gegenmagneten (69) an den Permanentmagneten (68) wird hierdurch auf den Permanentmagneten (68) eine Druckkraft ausgeübt, die dieser auf das zentralelement (49) überträgt. Diese Stellkraft führt zu einer Schließbewegung der Zangenarme (45, 46).

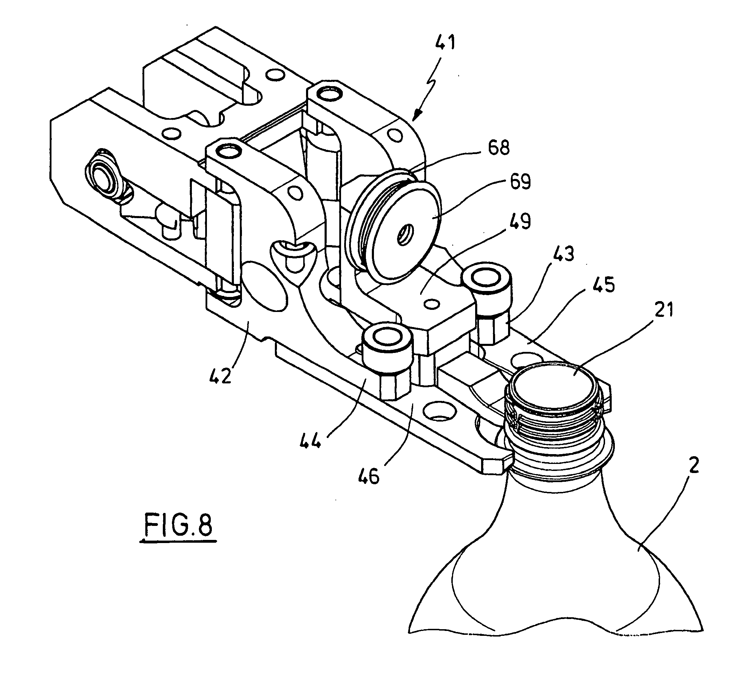

Fig. 8 zeigt einen Betriebszustand, in dem sich der Gegenmagnet (69) im Vergleich zur Anordnung in Fig. 7 bis auf einen geringen Abstand an den Permanentmagneten (68) angenähert hat. Der Behälter (2) ist mit seinem Mündungsabschnitt (21) bereits fast vollständig in den Aufnahmebereich der Zangenarme (45, 46) eingeführt und die Zangenarme (45, 46) stehen kurz vor einem Beginn ihrer Schließbewegung.

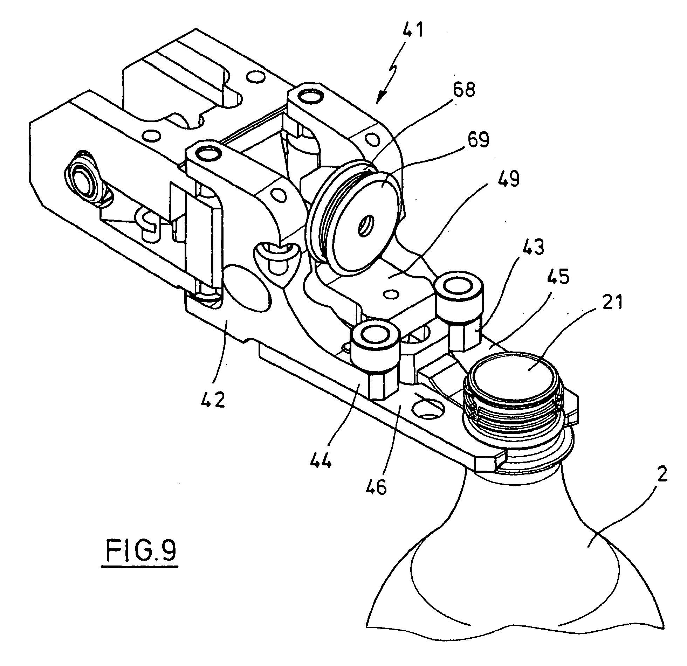

Fig. 9 zeigt das Transportelement (41) nach einem vollständigen Schließen der Zangenarme (45, 46). Der Behälter (2) ist hierbei im Mündungsabschnitt (21) von den Zangenarmen (45, 46) fixiert, beispielsweise oberhalb eines Stützringes.

Gemäß einer typischen Ausführungsform werden die Zangenträger (42) bzw. die Elementsockel (47) von einem rotierenden Übergaberad gehalten. Ebenfalls werden die Behälter (2) bzw. die Vorformlinge (1) oder allgemein die Werkstücke von rotierenden oder anderweitig bewegten Transportelementen in den Bereich der Transportelemente (41) gefördert oder von diesen weggefördert. Zweckmäßigerweise werden deshalb die Gegenmagnete (69) im Bereich einer derartigen Transporteinrichtung für die Werkstücke angeordnet.

Durch die vorstehend erläuterte Realisierungsvariante wird sichergestellt, daß zum einen die Position des Permanentmagneten (68) relativ zum Zangenträger (42) und andererseits die Position des Gegenmagneten (69) relativ zum zu übergebenden Werkstück definiert und konstant ist. Das Einfädeln bzw. Ausfädeln des zu halternden Teiles des Werkstückes zwischen die Zangenarme (45, 46) und die Annäherung bzw. Entfernung des Gegenmagneten (69) vom Permanentmagneten (68) kann hierdurch koordiniert werden, so daß die jeweiligen Bewegungen exakt aufeinander abgestimmt durchgeführt werden.

Gemäß einer Ausführungsvariante ist insbesondere daran gedacht, daß sich die Permanentmagnete (68) und die Gegenmagnete (69) während keines Teiles des Verfahrensablaufes berühren. Hierdurch kann eine besonders hohe Verschleißfestigkeit erreicht werden.

Gemäß einer anderen Ausführungsform ist vorgesehen, daß eine Berührung der Permanentmagnete (68) und der Gegenmagnete (69) zugelassen wird, daß aufgrund der einwirkenden abstoßenden Magnetkräfte aber nur eine geringe gegenseitige Kraftbeaufschlagung realisiert ist. Ergänzend ist hierbei ebenfalls daran gedacht, den Permanentmagneten (68) und/oder den Gegenmagneten (69) mit dünnen Beschichtungen, beispielsweise aus einem Kunststoff, zu versehen, um im Falle eines gegenseitigen Kontaktes Beschädigungen zu vermeiden.

Gemäß einer weiteren Ausführungsform ist daran gedacht, benachbart zum Permanentmagneten (68) und/oder benachbart zum Gegenmagneten (69) mechanische Führungselemente vorzusehen, die bei einer unzureichenden Kraftentfaltung durch die Magnete ein zwangsweise geführtes Öffnen oder Schließen der Zangenarme (45, 46) vorgibt, um auch im Falle eventueller Funktionsstörungen eine sichere Durchführung der Übergabevorgänge zu realisieren.

Alternativ oder ergänzend ist auch daran gedacht, für den Fall einer unzureichenden Kraftentfaltung durch die Magnete eine direkte Betätigung der Öffnungs- und/oder Schließbewegungen der Zangenarme (45, 46) durch das zu übergebende Werkstück zu ermöglichen, um eine sichere Funktion der Übergabevorgänge auch im Falle eines Auftretens von Störungen zu unterstützen.

Bei allen Ausführungsformen ist es bei den ortsfest angeordneten Magneten möglich, zusätzlich zu den Permanentmagneten Elektromagnete bzw. elektrisch angesteuerte Magnetsysteme zu verwenden.

## Patentansprüche

1. Verfahren zur Übergabe von Werkstücken, bei dem das Werkstück von einer zangenartigen Halteeinrichtung beaufschlagt wird, die mindestens einen relativ zu einem Zangenträger verschwenkbar angeordneten Zangenarm (45, 46) aufweist und bei dem der Zangenarm (45, 46) zur Durchführung von Greif- und Freigabebewegungen verschwenkt wird, sowie bei dem die Schwenkbewegung des Zangenarmes (45, 46) von mindestens einem Magneten (68) gesteuert wird, wobei als Magnet (68) ein Permanentmagnet verwendet wird, **dadurch gekennzeichnet, daß** der Zangenarm (45, 46) mit einer zusätzlichen mechanschen Betätigungseinrichtung gekoppelt wird.

2. Verfahren nach Anspruch 1, **dadurch gekennzeichnet, daß** mindestens zwei Magnete (68) zusammenwirken.

3. Verfahren nach Anspruch 1 oder 2, **dadurch gekennzeichnet, daß** der Magnet (68) und ein Gegenelement (69) relativ zueinander abstandsveränderlich bewegt werden.

4. Verfahren nach einem der Ansprüche 1 bis 3, **dadurch gekennzeichnet, daß** der Zangenträger (42) von einem Übergabearm eines rotierenden Transportrades positioniert wird.

5. Verfahren nach einem der Ansprüche 1 bis 4, **dadurch gekennzeichnet, daß** der Magnet (68) und ein als Magnet ausgebildetes Gegenelement (69) während der Durchführung einer Zangenbetätigung mit gleichsinnigen magnetischen Polen einander zugewandt positioniert werden.

6. Verfahren nach einem der Ansprüche 1 bis 4, **dadurch gekennzeichnet, daß** der Magnet (68) und ein als Magnet ausgebildetes Gegenelement (69) während der Durchführung einer Zangenbetätigung mit gegensinnigen magnetischen Polen einander zugewandt positioniert werden.

7. Verfahren nach einem der Ansprüche 1 bis 6, **dadurch gekennzeichnet, daß** der Magnet (68) und das Gegenelement (69) berührungslos aneinander vorbeigeführt werden.

8. Verfahren nach einem der Ansprüche 1 bis 7, **dadurch gekennzeichnet, daß** der Zangenträger (42) im Bereich einer Blasmaschine angeordnet wird.

9. Verfahren nach einem der Ansprüche 1 bis 8, **dadurch gekennzeichnet, daß** der Zangenträger (42) im Bereich einer Füllmaschine angeordnet wird.

10. Vorrichtung zur Übergabe von Werkstücken, die mindestens eine zangenartige Halteeinrichtung zur Beaufschlagung des Werkstückes aufweist, wobei die Halteeinrichtung mit mindestens einem relativ zu einem Zangenträger verschwenkbar angeordneten Zangenarm (45, 46) versehen ist, der eine erste Schwenkpositionierung zur Halterung des Werkstückes und eine zweite Schwenkpositionierung für eine Freigabe des Werkstückes aufweist, und bei der eine Positionierungseinrichtung für den Zangenarm (45, 46) mindestens einen relativ zu einem Gegenelement (69) abstandsveränderlich angeordneten Magneten (68) aufweist, wobei der Magnet (68) als ein Permanentmagnet ausgebildet ist, **dadurch gekennzeichnet, daß** der Zangenarm (45, 46) mit einer zusätzlichen mechanischen Betätigungseinrichtung gekoppelt ist.

11. Vorrichtung nach Anspruch 10, **dadurch gekennzeichnet, daß** die Positioniereinrichtung mindestens zwei Magnete (68) aufweist.

12. Vorrichtung nach Anspruch 10 oder 11, **dadurch gekennzeichnet, daß** der Zangenträger (42) von einem Übergabearm eines rotierenden Transportrades gehaltert ist.

13. Vorrichtung nach einem der Ansprüche 10 bis 12, **dadurch gekennzeichnet, daß** der Magnet (68) und ein als Magnet ausgebildetes Gegenelement (69) während einer Zangenbetätigung mit gleichen magnetischen Polen einander zugewandt angeordnet sind.

14. Vorrichtung nach einem der Ansprüche 10 bis 12, **dadurch gekennzeichnet, daß** der Magnet (68) und ein als Magnet ausgebildetes Gegenelement (69) während einer Zangenbetätigung mit gegensinnigen magnetischen Polen einander zugewandt angeordnet sind.

15. Vorrichtung nach einem der Ansprüche 10 bis 14, **dadurch gekennzeichnet, daß** die Positioniereinrichtung eine zusätzliche mechanische Führung aufweist.

16. Vorrichtung nach einem der Ansprüche 10 bis 15, **dadurch gekennzeichnet, daß** der Zangenträger (42) als Teil einer Blasmaschine ausgebildet ist.

17. Vorrichtung nach einem der Ansprüche 10 bis 15, **dadurch gekennzeichnet, daß** der Zangenträger (42) als Teil einer Füllmaschine ausgebildet ist.

## Claims

1. A method for transferring workpieces, in which the workpiece is acted upon by a gripper-like holding device which has at least one gripper arm (45, 46) which is arranged such that it may be pivoted relative to a gripper carrier and in which the gripper arm (45, 46) is pivoted for executing gripping and releasing movements, and in which the pivoting movement of the gripper arm (45, 46) is controlled by at least one magnet (68), wherein a permanent magnet is used as the magnet (68), **characterised in that** the gripper arm (45, 46) is coupled to an additional mechanical actuating device.

2. A method according to Claim 1, **characterised in that** at least two magnets (68) work together.

3. A method according to Claim 1 or 2, **characterised in that** the magnet (68) and a counter element (69) are moved relative to one another to alter the distance between them.

4. A method according to one of Claims 1 to 3, **characterised in that** the gripper carrier (42) is positioned by a transfer arm of a rotating transport wheel.

5. A method according to one of Claims 1 to 4, **characterised in that** the magnet (68) and a counter element (69) constructed as a magnet are positioned with their common magnetic poles facing one another during execution of a gripper actuation.

6. A method according to one of Claims 1 to 4, **characterised in that** the magnet (68) and a counter element (69) constructed as a magnet are positioned with their opposite magnetic poles facing one another during execution of a gripper actuation.

7. A method according to one of Claims 1 to 6, **characterised in that** the magnet (68) and the counter element (69) are moved past one another without contact.

8. A method according to one of Claims 1 to 7, **characterised in that** the gripper carrier (42) is arranged in the region of a blow-moulding machine.

9. A method according to one of Claims 1 to 8, **characterised in that** the gripper carrier (42) is arranged in the region of a filling machine.

10. An apparatus for transferring workpieces, which has at least one gripper-like holding device for acting upon the workpiece, wherein the holding device is provided with at least one gripper arm (45, 46) which is arranged such that it may be pivoted relative to a gripper carrier and has a first pivoting position for holding the workpiece and a second pivoting position for releasing the workpiece, and in which a positioning device for the gripper arm (45, 46) has at least one magnet (68) arranged relative to a counter element (69) such that the distance between them may be altered, wherein the magnet (68) is constructed as a permanent magnet, **characterised in that** the gripper arm (45, 46) is coupled to an additional mechanical actuating device.

11. A device according to Claim 10, **characterised in that** the positioning device has at least two magnets (68).

12. A device according to Claim 10 or 11, **characterised in that** the gripper carrier (42) is held by a transfer arm of a rotating transport wheel.

13. A device according to one of Claims 10 to 12, **characterised in that** the magnet (68) and a counter element (69) constructed as a magnet are arranged with their common magnetic poles facing one another during a gripper actuation.

14. A device according to one of Claims 10 to 12, **characterised in that** the magnet (68) and a counter element (69) constructed as a magnet are arranged with their opposite magnetic poles facing one another during a gripper actuation.

15. A device according to one of Claims 10 to 14, **characterised in that** the positioning device has an additional mechanical guide.

16. A device according to one of Claims 10 to 15, **characterised in that** the gripper carrier (42) is constructed as part of a blow-moulding machine.

17. A device according to one of Claims 10 to 15, **characterised in that** the gripper carrier (42) is constructed as part of a filling machine.

## Revendications

1. Procédé de transfert de pièces à transformer, dans lequel la pièce à transformer est manipulée par un dispositif de maintien, genre pince, doté d'au moins un bras de pince (45, 46), qui peut être pivoté par rapport à un porte-pince, et dans lequel le bras de pince (45, 46) est pivoté lors de l'exécution de mouvements de saisie et de libération, ainsi que dans lequel le pivotement du bras de pince (45, 46) est commandé par au moins un aimant (68), sachant que l'aimant (68) utilisé est un aimant permanent, **caractérisé en ce que** le bras de pince (45, 46) est couplé avec un dispositif d'actionnement mécanique, supplémentaire.

2. Procédé selon la revendication 1 **caractérisé en ce que** deux aimants (68) au moins coopèrent.

3. Procédé selon revendication 1 ou 2, **caractérisé en ce que** l'aimant (68) et un contre-élément (69) sont déplacés l'un par rapport à l'autre à une distance variable.

4. Procédé selon l'une des revendications 1 à 3, **caractérisé en ce que** le porte-pince (42) est positionné par un bras de transfert d'une roue de transport rotative.

5. Procédé selon l'une des revendications 1 à 4, **caractérisé en ce que**, pendant un actionnement de la pince, l'aimant (68) et un contre-élément (69), formé par un aimant, sont orientés l'un vers l'autre avec leurs mêmes pôles magnétiques.

6. Procédé selon l'une des revendications 1 à 4, **caractérisé en ce que**, pendant un actionnement de la pince, l'aimant (68) et un contre-élément (69), formé par un aimant, sont positionnés l'un vers l'autre avec leurs pôles magnétiques opposés.

7. Procédé selon l'une des revendications 1 à 6, **caractérisé en ce que** l'aimant (68) et le contre-élément (69) passent l'un à côté de l'autre sans se toucher.

8. Procédé selon l'une des revendications 1 à 7, **caractérisé en ce que** le porte-pince (42) est disposé dans la région d'une machine de soufflage.

9. Procédé selon l'une des revendications 1 à 8, **caractérisé en ce que** le porte-pince (42) est disposé dans la région d'une machine de remplissage.

10. Dispositif pour le transfert de pièces à transformer, lequel est doté d'au moins un dispositif de maintien en forme de pince pour la manipulation des pièces à transformer, sachant que le dispositif de maintien est doté d'au moins un bras de pince (45, 46), monté à pivotement par rapport à un porte-pince, qui peut prendre une première position de pivotement, pour maintenir la pièce à transformer, et une deuxième position de pivotement, pour libérer la pièce à transformer, et dans lequel un dispositif de positionnement du bras de pince (45, 46) est doté d'au moins un aimant (68), qui est disposé à distance variable d'un contre-élément (69), sachant que l'aimant (68) est un aimant permanent, **caractérisé en ce que** le bras de pince (45, 46) est couplé avec un dispositif d'actionnement mécanique supplémentaire.

11. Dispositif selon la revendication 10, **caractérisé en ce que** le dispositif de positionnement est doté d'au moins deux aimants (68).

12. Dispositif selon revendication 10 ou 11, **caractérisé en ce que** le porte-pince (42) est maintenu par un bras de transfert d'une roue de transport rotative.

13. Dispositif selon l'une des revendications 10 à 12, **caractérisé en ce que** l'aimant (68) et un contre-élément (69), formé par un aimant, sont orientés l'un vers l'autre avec pôles magnétiques de même sens, pendant un actionnement de la pince.

14. Dispositif selon l'une des revendications 10 à 12, **caractérisé en ce que** l'aimant (68) et un contre-élément (69), formé par un aimant, sont orientés l'un vers l'autre avec pôles ma- gnétiques de sens inverse, pendant un actionnement de la pince.

15. Dispositif selon l'une des revendications 10 à 14, **caractérisé en ce que** le dispositif de positionnement est doté d'un guidage mécanique, supplémentaire.

16. Dispositif selon l'une des revendications 10 à 15 **caractérisé en ce que** le porte-pince (42) est réalisé en tant qu'élément d'une machine de soufflage.

17. Dispositif selon l'une des revendications 10 à 15, **caractérisé en ce que** le porte-pince (42) est réalisé en tant qu'élément d'une machine de remplissage.
